# EUROPEAN PATENT SPECIFICATION

(11) **EP 2 664 166 B1**
(45) Date of publication and mention of the grant of the patent: **13.04.2016**
(21) Application number: 12702353.9
(22) Date of filing: 13.01.2012
(51) Int. Cl.: H04W 4/00, H04W 88/06, H04L 29/08

(54) **TECHNIQUES FOR DYNAMIC TASK PROCESSING IN A WIRELESS COMMUNICATION SYSTEM**
VERFAHREN ZUR DYNAMISCHEN AUFGABENVERARBEITUNG IN EINEM DRAHTLOSEN KOMMUNIKATIONSSYSTEM
TECHNIQUES PERMETTANT UN TRAITEMENT DE TÂCHE DYNAMIQUE DANS UN SYSTÈME DE COMMUNICATION SANS FIL

(30) Priority: 14.01.2011 US 201113007499
(43) Date of publication of application: 20.11.2013
(73) Proprietor: Qualcomm Incorporated, San Diego, CA 92121-1714 (US)
(72) Inventor: DAS, Soumya, San Diego CA 92121-1714 (US); KRISHNASWAMY, Dilip, San Diego CA 92121-1714 (US); RAJAMANI, Krishnan, San Diego CA 92121-1714 (US); SOLIMAN, Samir, S., San Diego CA 92121-1714 (US)
(74) Representative: Klang, Alexander H.
(86) International application number: PCT/US2012/021351
(87) International publication number: WO 2012/097321

(56) References cited:
- EP-A1- 1 895 456
- EP-A1- 2 264 980
- US-A1- 2010 315 225

## Description

### BACKGROUND

Wireless communication systems are widely deployed to provide various types of communication (e.g., voice, data, multimedia services, etc.) to multiple users. A wide variety of communication networks is used extensively throughout the world to connect individuals and organizations. The Internet is the best example of many communication networks from different organizations all operating under a single address space. There are many different network structures including, for example, wide area networks (WAN), metropolitan area networks (MAN), local area networks (LAN), campus area networks (CAN), and virtual private networks (VPN).

Many communication networks are based on wireless communications, where interconnections between network nodes are implemented without the use of wires. For example, a wireless local area network (WLAN) links two or more devices using some wireless distribution method (typically spread-spectrum or OFDM radio), and usually providing a connection through an access point to the wider internet. This gives users the mobility to move around within a local coverage area and still be connected to the network. Wireless LANs have become popular in the home due to ease of installation, and the increasing popularity of laptop computers. All components that can connect into a wireless medium in a wireless network are typically referred to as stations. Wireless stations fall into one of two categories: access points, and clients. Access points (APs), normally routers, are base stations for the wireless network. They communicate (e.g., transmit and receive data) with wireless enabled client devices. Wireless client devices include, but are not limited to, mobile devices such as laptops, personal digital assistants, mobile phones, or devices such as desktops and workstations that are equipped with a wireless network interface.

Recently, a new class of small base stations has emerged, which may be installed in a user's home and provide indoor wireless coverage to mobile units using existing broadband Internet connections. Such personal miniature base stations are generally known as access point base stations (gateways) or, alternatively, Home Node B (HNB), femto access points, femtocells or femto nodes. A gateway allows service providers to extend service coverage indoors, especially where access would otherwise be limited or unavailable. Typically, such miniature base stations (gateways) are connected to the Internet and the mobile operator's network via a DSL router or a cable modem. The gateways may form part of local networks and may be connected to various devices.

In one example, a gateway may be located in a particular area (e.g., indoors such as office or home), providing service to user devices within the area, such as, for example, providing connectivity to a wider network, e.g., the Internet or a WAN. User devices may be configured to perform a variety of different tasks. For example, user devices may be configured to receive, pre-process, and relay for further processing data transmitted to the user devices by sensors located within the area. However, user devices participating in the network may be constrained in terms of power, bandwidth, or processing capability. Thus it may be desirable to redistribute certain processing tasks from the user devices to a less constrained device (e.g., a gateway or a server connected with a gateway through a wide area network), while providing for service continuity for the user devices.

Attention is drawn to US 2010/315225 A1 which describes a communication gateway wristband serves as a source of patient identification and as an interface between a personal area network (PAN) of miniaturized electronic medical sensors on a patient and a wireless wide-area network (WWAN) such as a hospital network. The gateway wristband includes a PAN transceiver which can establish wireless data links with wireless medical sensors, a WWAN transceiver which can establish a wireless data link with WWAN infrastructure, a memory which stores a patient identifier, and a processor which receives data via the PAN transceiver and relays the patient identifier and the received data to an external network via the WWAN transceiver. The processor manages communications with both the PAN and WWAN transceivers, stores received sensor data in memory, and translates data from the PAN protocol to the WWAN protocol so that sensor data is relayed to the hospital infrastructure.

Attention is further drawn to EP 1 895 456 A1 which describes a reliable end-to-end monitoring system by means of which the location of containers and other conditions related to the containers can be continuously or almost continuously monitored. The containers are equipped with such container units that are capable to co-operate with each other, which is especially needed in challenging radio environments. The co-operation of the container units is based on mesh network algorithms. Each container unit placed in a container includes a short range radio and a cellular network radio. Thus, the container unit is able to connect to two different types of communication networks. In addition, each container unit uses a certain connection set-up logic. When a set-up attempt results in a connection, the container transmits its message through the connection. The invention comprises the container unit, a mesh network composed of container units, and a system reporting container events.

### SUMMARY

In accordance with the present invention a wireless communication system, a local gateway device, mobile device, and corresponding methods, as set forth in the independent claims, respectively, are provided. Preferred embodiments of the invention are described in the dependent claims.

Techniques for dynamic task distribution and processing in a wireless communication system are described. In one embodiment, the wireless communication system includes a sensor configured to measure a characteristic and to transmit information indicative of the measured characteristic. The system further includes a mobile device configured to receive and aggregate the information transmitted by the sensor, perform one or more processing tasks related to the aggregated information, determine whether at least one condition necessary for performing at least one of the processing tasks is not satisfied, and transfer a subset of the processing tasks for further performance. The system further includes a local gateway device configured to receive and aggregate the information indicative of the measured characteristic from the sensor and perform the processing tasks related to the aggregated information, receive and perform the transferred subset of the processing tasks from the mobile device, and send the processed information for further processing back to the mobile device or to a remote server.

### BRIEF DESCRIPTION OF THE DRAWINGS

FIG. 1 illustrates an exemplary wireless communication network.
FIG. 2 illustrates an example environment in which the described techniques may be practiced in accordance with an embodiment.
FIG. 3 illustrates an example of an environment for implementing aspects of the techniques described herein in accordance with an embodiment.
FIG. 4 illustrates a functional block diagram of an exemplary local gateway.
FIG. 5 illustrates a functional block diagram of an exemplary local mobile aggregator.
FIG. 6 is a functional block diagram of an exemplary remote server.
FIG. 7 illustrates a process flow diagram for a task processing operation of a fixed local aggregator (gateway device) in a wireless communication system in accordance with an embodiment.
FIG. 8 illustrates a process flow diagram for a method for selection of a transmission link between a mobile aggregator and a gateway in a wireless communication system in accordance with an embodiment.
FIG. 9 illustrates a process flow diagram for task distribution between a mobile aggregator, a gateway, and a remote server in a wireless communication system in accordance with an embodiment.
FIG. 10 illustrates a process flow diagram for a local gateway device operation in a wireless communication system in accordance with an embodiment.
FIG. 11 illustrates a process flow diagram for task distribution between a mobile aggregator, a gateway, and a remote server in a wireless communication system in accordance with another embodiment.
FIG. 12 illustrates a process flow diagram for a task distribution between a gateway, a mobile aggregator, and a remote server in a wireless communication system in accordance with an embodiment.

### DETAILED DESCRIPTION

The techniques described herein may be used for various wireless communication networks such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. In some aspects the teachings herein may be employed in a network that includes macro scale coverage (e.g., a large area cellular network such as a 3G networks, typically referred to as a macro cell network) and smaller scale coverage (e.g., a residence-based or building-based network environment). As a user mobile device (also known in the art as "user equipment") moves through such a network, the user device may be served in certain locations by access nodes that provide macro coverage while the user equipment may be served at other locations by access nodes that provide smaller scale coverage. In some aspects, the smaller coverage nodes may be used to provide incremental capacity growth, in-building coverage, and different services (e.g., for a more robust user experience). In the discussion herein, a node that provides coverage over a relatively large area may be referred to as a macro node (e.g., cell tower or base station). A node that provides coverage over a relatively small area (e.g., a residence or commercial building) may be referred to as a local gateway device or fixed local aggregator.

Techniques are provided for maintaining service continuity with an optional gateway and redistribution of tasks between different nodes for load balancing with local aggregation of data collected from mobile sensors located in proximity to a mobile user device (e.g., a local aggregator device) and tiered pre-processing with variable number of tiers. An example of a system configured to perform the local data aggregation and pre-processing comprises sensors, a mobile local aggregator, and a fixed local aggregator. The sensors are configured to collect data, such as health-related data (in which case sensors may be embedded in the body of, or otherwise associated with, a person). A fixed local aggregator (e.g., a proxy server or a local gateway) assists in the aggregation and pre-processing, along with the mobile local aggregator or bypassing the mobile local aggregator thereby offloading the processing from the mobile local aggregator when the sensors are in range of the gateway before sending the data to a server, in one embodiment, a health provider's remote server. Therefore, the pre-processing is done in a tiered way and the local aggregation point shifts between mobile local aggregator and fixed local aggregator. A mobile wireless device acts as the mobile local aggregator and can be a cellular phone, laptop, PDA, or any other type of user equipment (UE). A fixed local aggregator could be a Bluetooth® AP, ZigBee® health AP, femtocell etc. One or more of both or either of the mobile and fixed local aggregators can be present.

In one embodiment, sensor data is provided to a mobile local aggregator (e.g., a mobile phone) and then relayed to the fixed local aggregator (e.g., a health gateway device). Alternatively, the sensor data may be sent directly to the fixed local aggregator, bypassing the mobile local aggregator. The fixed local aggregator processes or pre-processes the sensor data and then sends the processed data to a remote server for further processing, for example, diagnostic review if the sensors are configured to monitor health-related data of a person. Thus, the fixed local aggregator serves as a local proxy server, or gateway, configured to process the aggregated data. Outside the coverage of the fixed local aggregator, the sensor data are provided to a mobile local aggregator and then relayed to the remote server over the WWAN network to a health service provider server for diagnostic review. In one embodiment, the reception of the sensor data may be "negotiated" between the mobile local aggregator and the fixed local aggregator; for example, the mobile local aggregator may request that the fixed local aggregator receive data from the sensor if conditions related to reception (mobile device internal resources, memory capacity, communication issues and the like) prevent the mobile aggregator from receiving the data from the sensors. By the same token, the fixed local aggregator may request that the mobile local aggregator receive the data from the sensors for similar reasons. In one embodiment, a mobile device associated with the user may be paged when abnormal conditions are detected in the monitored data.

The sensors are configured to communicate with the mobile local aggregator via a personal or home area network protocol, or the like. The mobile local aggregator can transmit the collected sensor data to the fixed local aggregator via a wide area communication protocol or preferably over an out-of-band (OOB) link, e.g., Bluetooth®, ZigBee®, or the like. The sensors may bypass the mobile local aggregator (if their range and power capacity allow for it and the fixed local aggregator is within range) and communicate directly with the fixed local aggregator (gateway) over the OOB link. The fixed local aggregator aggregates and pre-processes the raw data and sends the pre-processed data over the WWAN network or wired broadband network to a health service provider server for diagnostic review. If any abnormality is detected, the mobile local aggregator is notified.

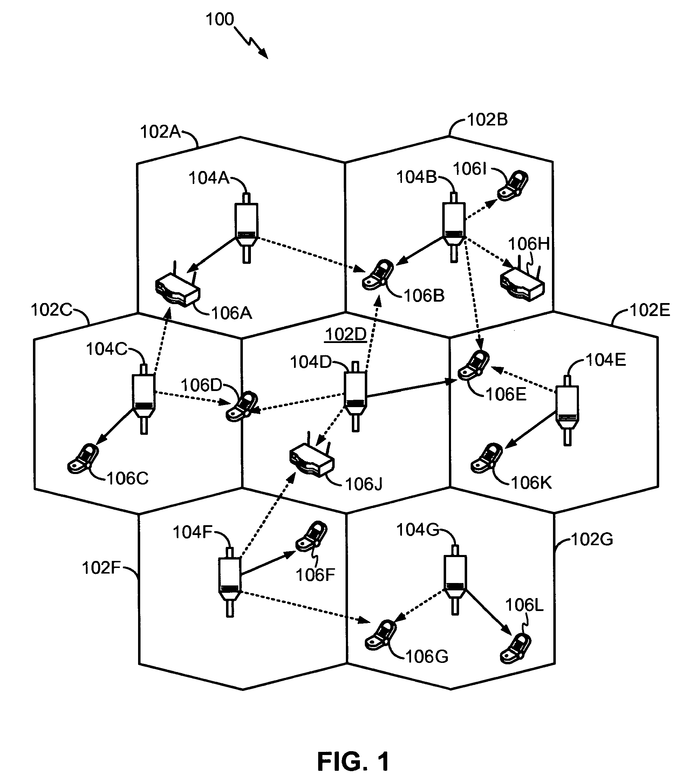

The mobile local aggregator, when using the OOB link to connect with the fixed local aggregator, consumes less power compared to the use of conventional communication links, such as 3G. Similarly, mobile local aggregator power consumption can be reduced by offloading pre-processing of the sensor data from the mobile local aggregator to the fixed local aggregator. Furthermore, data pre-processing can be seamlessly shifted between the mobile local aggregator, the fixed local aggregator, and a remote server depending on the proximity of the transmitting sensor to the mobile local aggregator, the proximity of the mobile local aggregator to the fixed local aggregator, the energy efficiency of a given communication link, and the available power of the mobile local aggregator. Thus, the described techniques provide for maintaining service continuity of mobile sensor data by a mobile local aggregator with distributed task management between mobile sensors, and the fixed local aggregator, thereby enabling tiered pre-processing with variable number of tiers. The techniques are described below in greater detail in reference to FIGS. 1-12.

FIG. 1 illustrates an exemplary wireless communication network 100. The wireless communication network 100 is configured to support communication between a number of users. The wireless communication network 100 may be divided into one or more cells 102, such as, for example, cells 102a-102g. Communication coverage in cells 102a-102g may be provided by one or more nodes 104, such as, for example, nodes 104a-104g. Each node 104 may provide communication coverage to a corresponding cell 102. The nodes 104 may interact with a plurality of user devices (also known as user equipments, or UEs), such as, for example, UEs 106a-106l. Each UE 106 may communicate with one or more nodes 104 on a forward link (FL) and/or a reverse link (RL) at a given moment. A FL is a communication link from a node to a UE. A RL is a communication link from a UE to a node. The nodes 104 may be interconnected, for example, by appropriate wired or wireless interfaces and may be able to communicate with each other. Accordingly, each UE 106 may communicate with another UE 106 through one or more nodes 104. For example, the UE 106j may communicate with the UE 106h as follows. The UE 106j may communicate with the node 104d. The node 104d may then communicate with the node 104b. The node 104b may then communicate with the UE 106h. Accordingly, a communication is established between the UE 106j and the UE 106h.

As described above, a node 104 may provide a UE 106 access within its coverage area to a communication network, such as, for example the Internet or a cellular network. A UE 106 may be a wireless communication device (e.g., a mobile phone, router, personal computer, server, etc.) used by a user to send and receive voice or data over a communication network. A user equipment (UE) may also be referred to herein as a mobile device, a user device, or a mobile local aggregator. As shown, UEs 106a, 106h, and 106j comprise routers. UEs 106b-106g, 106i, 106k, and 1061 comprise mobile phones. However, each of UEs 106a-106l may comprise any suitable communication device. In the embodiments described herein UEs 106a, 106h, and 106j may comprise local gateway devices, whereas UEs 106b-106g, 106i, 106k, and 1061 comprise mobile local aggregators or mobile devices.

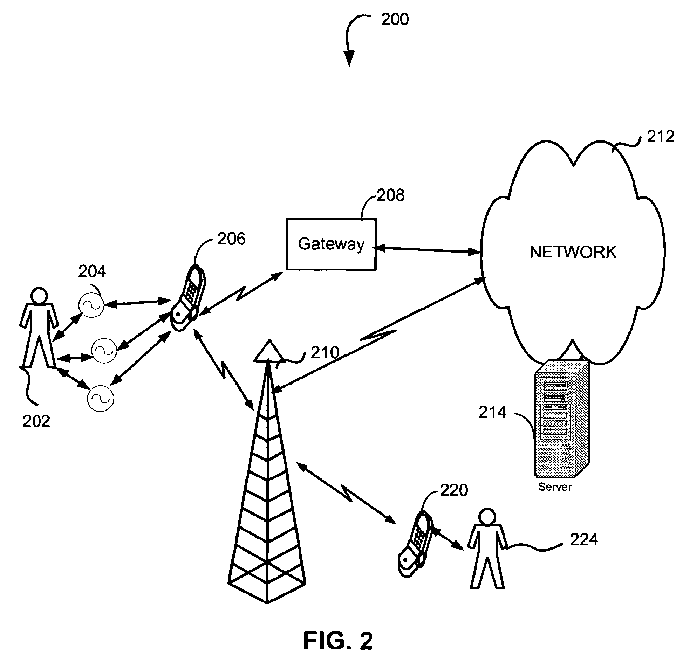

FIG. 2 illustrates an example environment 200 in which the present invention may be practiced in accordance with an embodiment. The environment 200 may utilize at least some components of the wireless communication network 100 described above. The environment 200 includes users 202 and 224 equipped with mobile devices 206 and 220 respectively. In one embodiment, the user 202 may have sensors 204 attached to, or otherwise associated with, user's body and configured to monitor various parameters of the user's body, e.g., blood pressure, temperature, and the like. One skilled in the art will appreciate that healthcare is but one implementation of the environment 200. Indeed, the sensors 204 may be mobile or stationary and may be configured to register various parameters that are not necessarily related to a user's health. For example, the sensors 204 may measure environment characteristics, or any type of parameters that are needed to be measured. As discussed above, the sensors 204 are configured to communicate with a mobile local aggregator, e.g., mobile device 206, via a personal or home area network protocol such as Bluetooth®, ZigBee®, or the like. In one embodiment, the sensors 204 may bypass the mobile local aggregator (for example, if their range and power capacity allow for it and the fixed local aggregator is within range or at the request of the mobile local aggregator) and communicate directly with a fixed local aggregator, e.g., gateway 208, in one embodiment, over the OOB link.

In one embodiment, the mobile local aggregator 206 may transmit the collected sensor data to the gateway 208 via a wide area communication protocol (e.g., 3G) or, in one embodiment, over an out-of-band (OOB) link, e.g., Bluetooth®, ZigBee®, or the like. The gateway 208 is configured to aggregate and process (preprocess) the raw data received from the sensors 204 and to send the pre-processed data over the network 212 (in one embodiment, over WWAN or wired broadband network) to a remote server, such as a health service provider server 214, for diagnostic review. If any abnormality is detected, the mobile local aggregator 206 may be notified of the detected abnormality.

In one embodiment, the user 202, associated sensors 204, mobile local aggregator 206, and the gateway 208 may be located indoors, e.g., in a building, house, room or other indoor location. The user 224 may be located outside of the gateway 208's communication range (e.g., outdoors) and thus the mobile device 220 may be connected to a wide network (e.g., network 212) through a macro node (e.g., cell tower) 210. Thus, a possible connection between a user mobile device (e.g., 206 or 220) and the remote server 214 may be accomplished via the cell tower 210 and network 212 when the user mobile device is outside of gateway 208's range.

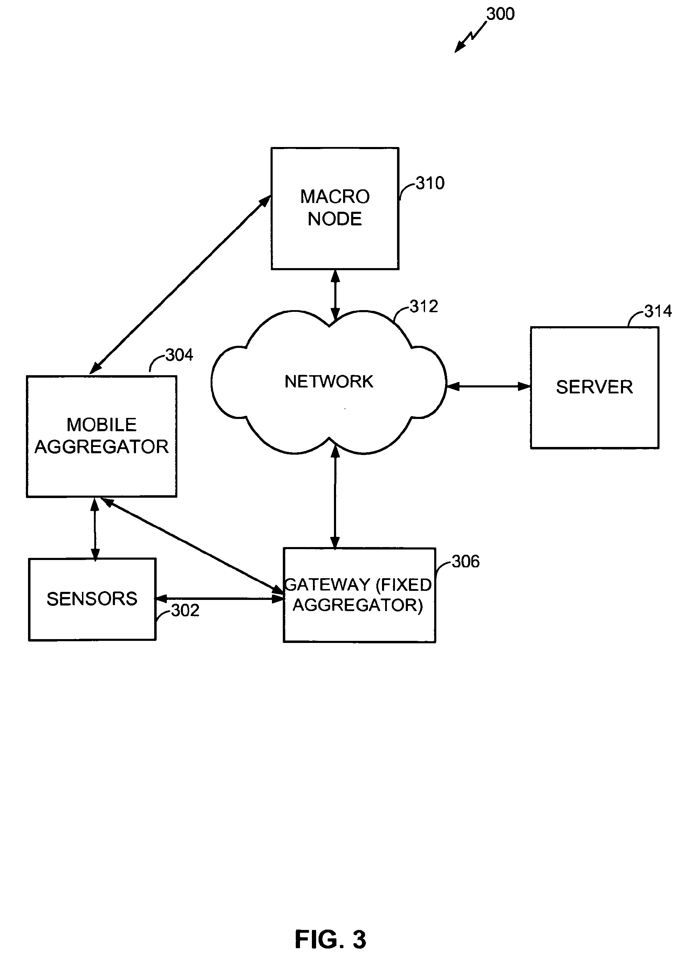

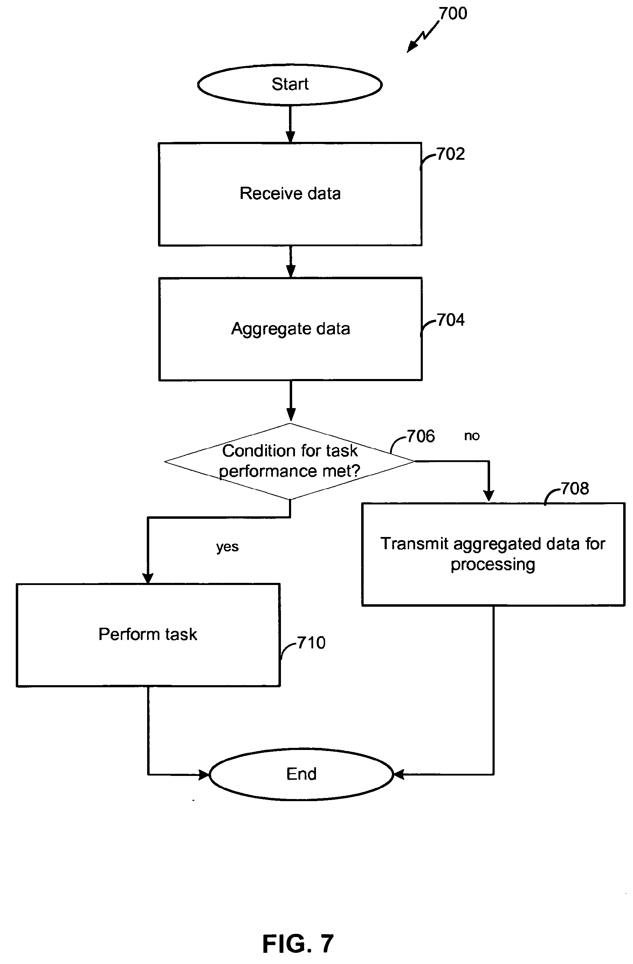

FIG. 3 illustrates an example of an environment 300 for implementing aspects of the techniques described herein in accordance with various embodiments. As will be appreciated, although the environment 300 is used for purposes of explanation, different environments may be used, as appropriate, to implement various embodiments. The environment 300 may be realized utilizing one or more of the components of the environment 200 described above in connection with FIG. 2. The environment 300 includes at least one sensor 302 that may be connected to a mobile local aggregator 304 or to a fixed aggregator (gateway) 306. The mobile aggregator 304 may be connected via a network 312 to a remote server 314 by at least two different ways: either via a macro node 310 or via the gateway 306, depending on particular conditions as described below in reference to FIGS. 7-12 in greater detail. As described above, the local mobile aggregator is configured to aggregate and, in some cases, pre-process data collected from the sensor(s) 302. As described above, the local fixed aggregator (gateway) 304 may be configured to collect, pre-process, and communicate the pre-processed data to the server 314 for further processing. The server 314 may be configured to process data received from the gateway 306 or from the mobile local aggregator 304. The server 314 may be further configured to notify the gateway 306 or the mobile aggregator 304 about the data processing results (e.g., processing task completion) or provide other types of notifications, decisions or results to these devices.

In one embodiment, the gateway 306 may be treated as a trusted extension of the mobile aggregator 304. For example, the gateway 306 may be used to store data corresponding to users of the mobile aggregator 304 such as preferences, transactions histories, or profiles. Based on the stored information, the gateway 310 may be able to better perform processing tasks on behalf of the mobile aggregator 304. In one embodiment, the gateway 306 may be able to utilize the stored information without exposing or providing the information directly to other devices such as the server 314. In this manner, the gateway 306 can offer enhanced functionality without compromising privacy or security. In one embodiment, the information regarding each mobile aggregator 304 may be logically separated on the gateway 306. In this manner, the information corresponding to each mobile aggregator 304 can be kept separate and secure. In other embodiments, the gateway 306 may also comprise offload resources for the server 314.

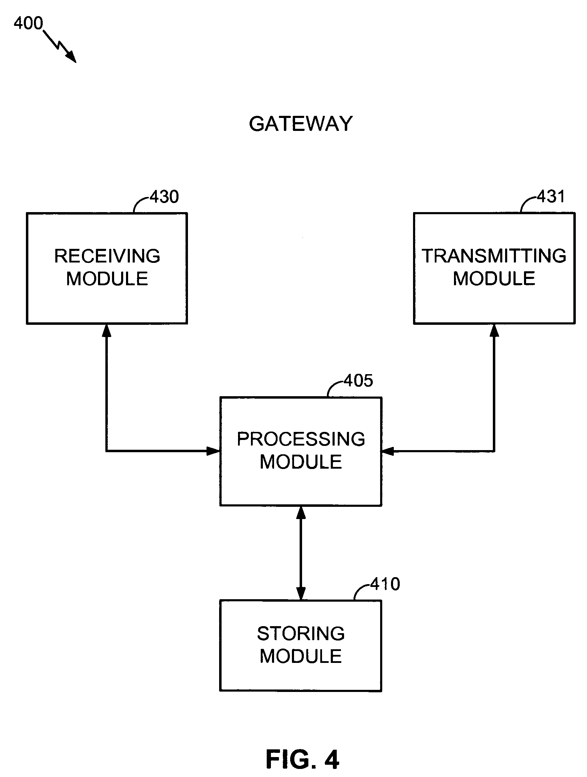

FIG. 4 is a functional block diagram of an exemplary fixed local aggregator (gateway) 400. The gateway 400 may be similar to the gateway 304 of FIG. 3. The gateway 400 may comprise a transmitting module 431. The transmitting module 431 may transmit outbound messages to other devices, such as, for example, the mobile local aggregator 304 and the network 312 of FIG. 3. The messages may include communications related to distributed computing with the mobile local aggregator 304. For example, the messages may include the results of processing tasks offloaded by the mobile local aggregator 304. The gateway 400 may also comprise a receiving module 430 configured to receive inbound messages from devices such as the mobile local aggregator 304, sensors 302, or the network 312. The received messages may include instructions from the mobile local aggregator 304 to perform a processing task or data from the network 312 or the sensors 302 to be processed. The receiving module 430 and the transmitting module 431 may be coupled to a processing module 405. The receiving module 430 may pass an inbound message to the processing module 405 for processing. The processing module 405 may process and pass an outbound message to the transmitting module 431 for transmission. The processing module 405 may be configured to process the inbound and outbound wired and wireless messages via the receiving module 430 and the transmitting module 431. The processing module 405 may also be configured to control other components of the gateway 400.

The processing module 405 may further be coupled, via one or more buses, to a storing module 410. The processing module 405 may read information from or write information to the storing module 410. For example, the storing module 410 may be configured to store inbound our outbound messages before, during, or after processing. In particular, the storing module 410 may be configured to store information relating process offloading. In one aspect, the storing module 410 may also be configured to store information related to a processing task that has been offloaded from the mobile local aggregator 304.

The receiving module 430 and the transmitting module 431 may comprise an antenna and a transceiver. The transceiver may be configured to modulate/demodulate the wireless outbound/inbound messages. The wireless outbound/inbound messages may be transmitted/received via the antenna. The antenna may be configured to send and/or receive the outbound/inbound wireless messages over one or more channels. The receiving module 430 may demodulate the data received. The transmitting module 431 may modulate data to be sent from the gateway 400. The processing module 405 may provide data to be transmitted.

The receiving module 430 and the transmitting module 431 may further comprise a modem. The modem may be configured to modulate/demodulate the outbound/inbound wired messages going to or coming from the network. The receiving module 430 may demodulate data received. The demodulated data may be transmitted to the processing module 405. The transmitting module 431 may modulate data to be sent from the gateway 400. The processing module 405 may provide data to be transmitted.

The storing module 410 may comprise processing module cache, including a multi-level hierarchical cache in which different levels have different capacities and access speeds. The storing module 410 may also comprise random access memory (RAM), other volatile storage devices, or non-volatile storage devices. The storage may include hard drives, optical discs, such as compact discs (CDs) or digital video discs (DVDs), flash memory, floppy discs, magnetic tape, and Zip drives.

Although described separately, it is to be appreciated that functional blocks described with respect to the gateway 400 need not be separate structural elements. For example, the processing module 405 and the storing module 410 may be embodied in a single chip. The processing module 405 may additionally, or in the alternative, contain memory, such as registers. Similarly, one or more of the functional blocks or portions of the functionality of various blocks may be embodied in a single chip. Alternatively, the functionality of a particular block may be implemented on two or more chips.

One or more of the functional blocks and/or one or more combinations of the functional blocks described with respect to the gateway 400, such as the processing module 405, may be embodied as a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein. One or more of the functional blocks and/or one or more combinations of the functional blocks described with respect to the gateway 400 may also be implemented as a combination of computing devices, e.g., a combination of a DSP and a microprocessor, a plurality of microprocessors, one or more microprocessors in conjunction with a DSP communication, or any other such configuration.

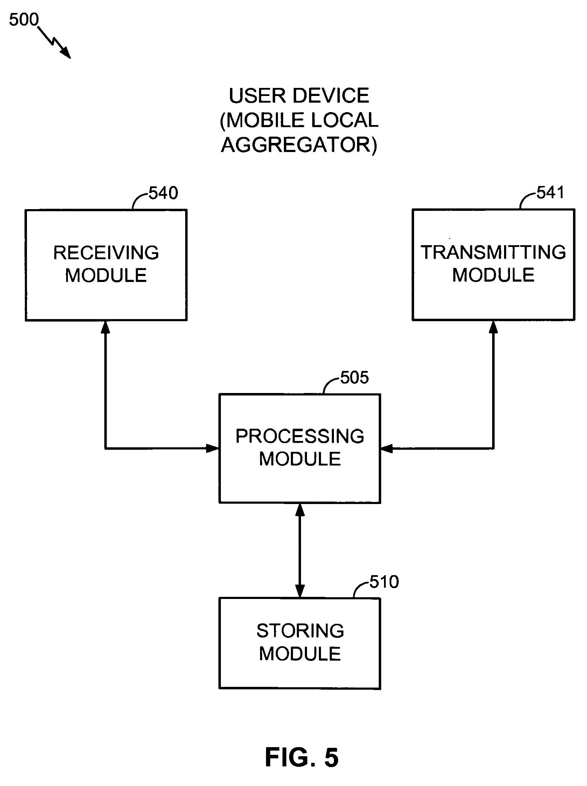

FIG. 5 is a functional block diagram of an exemplary mobile local aggregator 500 in the communication network of FIG. 3. The mobile local aggregator 500 may be similar to the mobile local aggregator 304 of FIG. 3. The mobile local aggregator 500 may comprise a transmitting module 541. The transmitting module 541 may transmit outbound messages to other devices, such as, for example, the gateway 400. The messages may include information related to offloading processing tasks. For example, the messages may include an indication of an operation to be performed. The messages may also include data to be processed. The mobile local aggregator 500 may also comprise a receiving module 540 configured to receive inbound messages from devices such as the gateway 306 or sensors 302. The receiving module may be configured to receive message related to off loading processing. For example, the messages may include the results off processing tasks that were offloaded to the gateway 400, e.g., sensor data pre-processing. The receiving module 540 and the transmitting module 541 may be coupled to a processing module 505. The receiving module 540 may pass an inbound message to the processing module 505 for processing. The processing module 505 may process data received from the sensors 302 and pass an outbound message containing the processed data to the transmitting module 541 for transmission. The processing module 505 may also be configured to control other components of the mobile local aggregator 500.

The processing module 505 may further be coupled, via one or more buses, to a storing module 510. The processing module 505 may read information from or write information to the storing module 510. For example, the storing module 510 may be configured to store inbound our outbound messages before, during, or after processing. In particular, the storing module 510 may be configured to store information relating process offloading.

The receiving module 540 and the transmitting module 541 may comprise an antenna and a transceiver. The transceiver may be configured to modulate/demodulate the wireless outbound/inbound messages going to or coming from local network device 540 or another user device. The wireless outbound/inbound messages may be transmitted/received via the antenna. The antenna may be configured to send and/or receive the outbound/inbound wireless messages over one or more channels. The receiving module 530 may demodulate the data received. The transmitting module 541 may modulate data to be sent from the mobile local aggregator 500. The processing module 505 may provide data to be transmitted.

The storing module 510 may comprise processing module cache, including a multi-level hierarchical cache in which different levels have different capacities and access speeds. The storing module 510 may also comprise random access memory (RAM), other volatile storage devices, or non-volatile storage devices. The storage may include hard drives, optical discs, such as compact discs (CDs) or digital video discs (DVDs), flash memory, floppy discs, magnetic tape, and Zip drives.

Although described separately, functional blocks described with respect to the mobile local aggregator 500 need not be separate structural elements. For example, the processing module 505 and the storing module 510 may be embodied in a single chip. The processing module 505 may additionally, or in the alternative, contain memory, such as registers. Similarly, one or more of the functional blocks or portions of the functionality of various blocks may be embodied in a single chip. Alternatively, the functionality of a particular block may be implemented on two or more chips.

One or more of the functional blocks and/or one or more combinations of the functional blocks described with respect to the mobile local aggregator 500, such as the processing module 505, may be embodied as a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein. One or more of the functional blocks and/or one or more combinations of the functional blocks described with respect to the gateway 400 may also be implemented as a combination of computing devices, e.g., a combination of a DSP and a microprocessor, a plurality of microprocessors, one or more microprocessors in conjunction with a DSP communication, or any other such configuration.

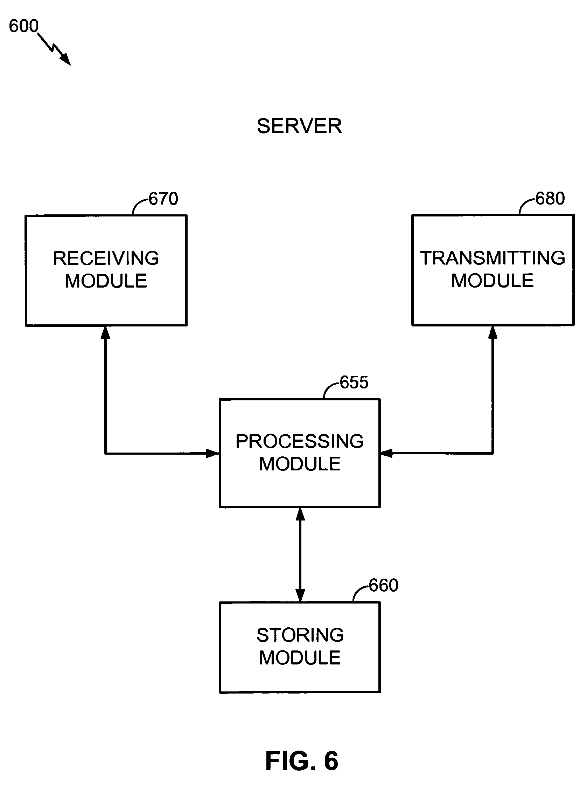

FIG. 6 is a functional block diagram of an exemplary server 600. The server 600 may be similar to the remote server 314 of FIG. 3. The server 600 may comprise a transmitting module 680. The transmitting module 680 may transmit outbound messages to other devices, such as, for example, the gateway 306. The messages may include information related to a distribution of processing tasks. For example, the messages may include an indication of an operation to be performed. The messages may also include data to be processed. The server 600 may also comprise a receiving module 670 configured to receive inbound messages from devices such as the gateway 306. The receiving module may be configured to receive message related to off loading processing. For example, the messages may include the results off processing tasks that were offloaded to the gateway 306. The receiving module 670 and the transmitting module 680 may be coupled to a processing module 655. The receiving module 670 may pass an inbound message to the processing module 655 for processing. The processing module 655 may process and pass an outbound message to the transmitting module 680 for transmission. The processing module 655 may also be configured to control other components of the server 600.

The processing module 655 may further be coupled, via one or more buses, to a storing module 660. The processing module 655 may read information from or write information to the storing module 660. For example, the storing module 660 may be configured to store inbound our outbound messages before, during, or after processing. In particular, the storing module 660 may be configured to store information relating process offloading.

The receiving module 670 and the transmitting module 680 may comprise a modem. The modem may be configured to modulate/demodulate the outbound/inbound wired messages going to or coming from the network. The receiving module 670 may demodulate data received. The demodulated data may be transmitted to the processing module 655. The transmitting module 680 may modulate data to be sent from the server 600. The processing module 655 may provide data to be transmitted.

The storing module 660 may comprise processing module cache, including a multi-level hierarchical cache in which different levels have different capacities and access speeds. The storing module 660 may also comprise random access memory (RAM), other volatile storage devices, or non-volatile storage devices. The storage may include hard drives, optical discs, such as compact discs (CDs) or digital video discs (DVDs), flash memory, floppy discs, magnetic tape, and Zip drives.

Although described separately, functional blocks described with respect to the server 600 need not be separate structural elements. For example, the processing module 655 and the storing module 660 may be embodied in a single chip. The processing module 655 may additionally, or in the alternative, contain memory, such as registers. Similarly, one or more of the functional blocks or portions of the functionality of various blocks may be embodied in a single chip. Alternatively, the functionality of a particular block may be implemented on two or more chips.

One or more of the functional blocks and/or one or more combinations of the functional blocks described with respect to the server 600, such as the processing module 655, may be embodied as a general purpose processor, a digital signal processor (DSP), an application specific integrated circuit (ASIC), a field programmable gate array (FPGA) or other programmable logic device, discrete gate or transistor logic, discrete hardware components, or any suitable combination thereof designed to perform the functions described herein. One or more of the functional blocks and/or one or more combinations of the functional blocks described with respect to with respect to the server 600 may also be implemented as a combination of computing devices, e.g., a combination of a DSP and a microprocessor, a plurality of microprocessors, one or more microprocessors in conjunction with a DSP communication, or any other such configuration.

FIG. 7 illustrates a process flow diagram for an operation of a fixed local aggregator (gateway device) in a wireless communication system such as described in FIGS. 1-6. The gateway device has been described in detail in reference to FIGS. 2, 3, and 4. Normally, in the environment illustrated in FIGS. 2 and 3, a mobile aggregator may receive data from the sensors, aggregate the data, pre-process the data, and transmit the pre-processed data to the fixed aggregator (gateway). The gateway may further process received aggregated data if needed and then transmit it to a remote server for further processing and analysis or back to the mobile device for performing tasks associated with the pre-processed data. The process 700 starts at block 702 where a gateway receives data from a mobile aggregator or sensors. At block 704, the gateway aggregates the received data. At block 706, it is determined whether at least one condition for performing tasks associated with the received data is not met. If at least one condition is not met, at block 708, the data is transmitted to a remote server or to a mobile device for further processing. If all conditions are met, at block 710 the task or tasks are processed. The process 700 then ends. It is important to note that the above process may be applied to a mobile local aggregator: similarly to the gateway operation, the mobile local aggregator may receive and aggregate data, determine whether all conditions for task performance at the mobile local aggregator are met, and either perform the tasks or transfer the tasks for further performance to a fixed local aggregator or to a remote server as will be described below in greater detail.

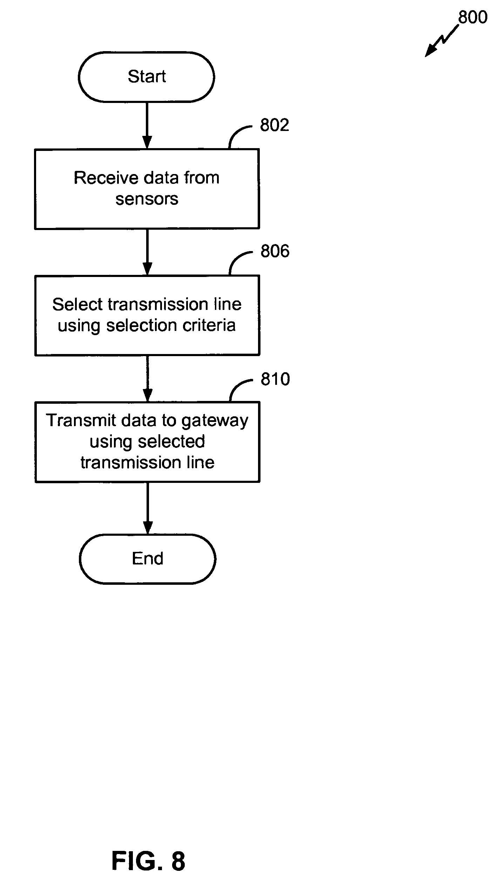

FIG. 8 illustrates the process flow diagram for a method for selection of a transmission link between a mobile aggregator and a gateway in a wireless communication system. In the example where a local mobile aggregator transmits the data submitted by the sensors to the gateway, the transmission may be made over a particular communication link selected from available communication links based on various criteria, such as, for example, link efficiency, power supply necessary for transmission, distance between a transmitter and a receiver and the like. As discussed above, in one embodiment, a link between the local mobile aggregator and the gateway may be selected from a wide area communication link (e.g., 3G), or any of OOB links that are available (e.g., Bluetooth®, ZigBee®, and the like). The process 800 illustrating the link selection begins at block 802, the data is received from sensors. At block 806, a transmission line between the mobile aggregator and the gateway is selected, using selection criteria, e.g., predetermined energy, efficiency, distance, or power thresholds. Finally, at block 810, the received data is transmitted to the gateway, using the selected transmission line. The process 800 then ends.

In some embodiments, it is desirable for the mobile local aggregator (mobile device) to be able to distribute some of its tasks related to information received from the sensors, for example, to a local gateway device. Similarly, the local gateway device may need to distribute some of its tasks back to the mobile device. The tasks may include receiving information from the sensors, aggregating the received information, processing the received information, analyzing the processed information, transmitting information, and the like. In general, offloading a task or distributed computing refer to a process by which multiple entities cooperate to perform a function. Where one device is constrained in terms of resources such as power or computing capability, such as processor capacity, available memory, and the like, offloading certain tasks can increase the functional capabilities of the device. For example, the battery life of the mobile local aggregator may be limited such that power intensive computational operations can not be performed indefinitely. Thus, redistributing a task may extend the battery life of the mobile local aggregator. Alternatively, limitations on the computing power in terms of operations per second or types of operations may constrain speed or accuracy of certain calculations. Offloading a task may allow the mobile local aggregator to quickly obtain results without requiring hardware capability or power for quickly generating the results.

In one embodiment, it may be desirable to offload a task where the cost of transmitting the request and receiving the response is lower than the cost of performing the task. Thus, for example, if the task to be offloaded is computationally simple, but involves significant amounts of data, the cost of sending the data to the gateway to be processed and the cost of receiving the processed data may exceed the cost of performing the operation. In this case, the local mobile aggregator may determine not to offload the task. In some embodiments, where the mobile aggregator is not capable of performing the processing task, the relative cost of communication is moot and the task may be offloaded. However, in such instances, using the gateway to offload the task is advantageous because the latency of such communications is low and because the data transferred to the gateway does not have to be exposed to the network for processing. Thus the security and privacy of the data may be better maintained.

More generally, the allocation of tasks to different nodes can be based on factors such as the cost for communication of a message on a wireless link, the cost of computation of tasks on each node, i.e., the mobile local aggregator, gateway, and remote server, the relative amount of energies available on each node, their frequency of charging, the link conditions, the bandwidth of a wireless channel, the interference on a wireless channel, the utilization factor of a channel, the number of nodes on a given channel, the wireless protocol being used for a given wireless link and the efficiency of the protocol, the degree of redundancy of information on the channel, a monetary cost of any for utilization of a link, and so on. Further, the decision to offload (redistribute) a task may be made dynamically based on current or previous conditions or statically based on the nature of the task to be offloaded or other factors. In one embodiment, determining a task to offload may comprise determining a resource saving value based on one or more of the factors described above. For example, the resource saving value may be an amount of energy that would be saved by offloading the task rather than performing the task locally at the mobile local aggregator or gateway. The mobile aggregator, the gateway, and the remote server may be configured to compare the resource savings value to a threshold and decide to offload the task if the savings value exceeds the threshold for each respective device. Thus, in one embodiment, the mobile local aggregator and the fixed local aggregator may "negotiate" with each other and dynamically distribute processing tasks depending on particular conditions or parameters of each respective device.

Accordingly, in one embodiment, a local gateway device may be used for offloading processing tasks from the mobile device. For example, the mobile device may supply the gateway with data and with an instruction to perform certain operations on the data. The gateway may perform the operations and return the result to the mobile device. In this manner, the mobile device is able to conserve the power or other resources that would have been consumed by performing the operations at the mobile device. In another example, the gateway may receive communications from the network for the mobile device. However, rather than passing the communications on to the mobile device, the gateway may perform a processing task on the communications. For example, the gateway may be configured to filter out irrelevant communications rather than passing them along. In this manner, the band width and power associated with receiving irrelevant communications are saved by the mobile device. In addition, the mobile device conserves the resources that would have been spent determining which communications were irrelevant. In general, the gateway may advantageously be treated as an extension of the mobile device. Thus, the mobile device may be configured to access the relatively abundant processing and power resources of the gateway.

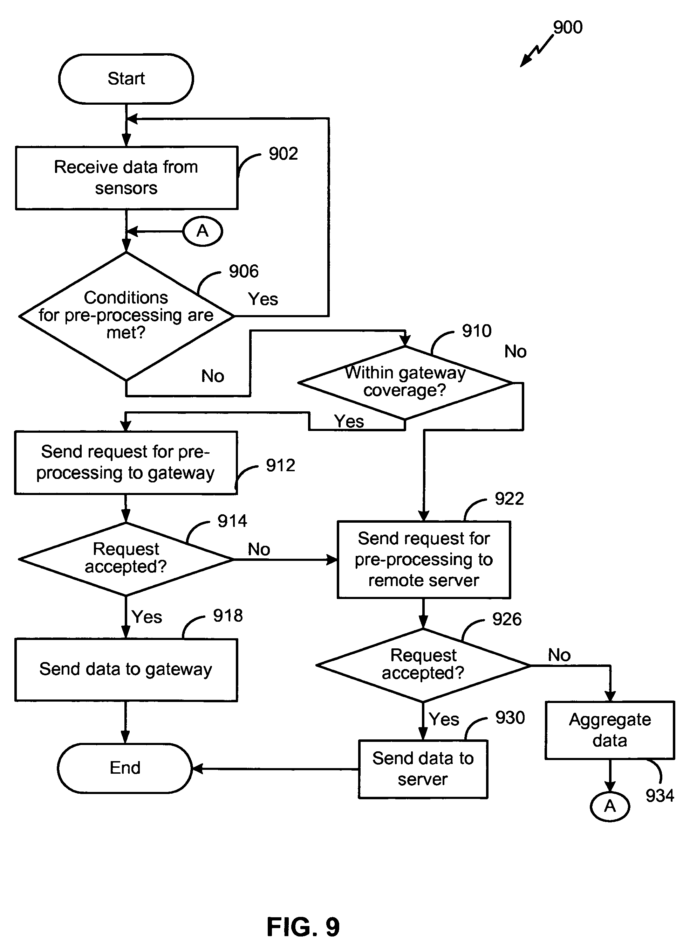

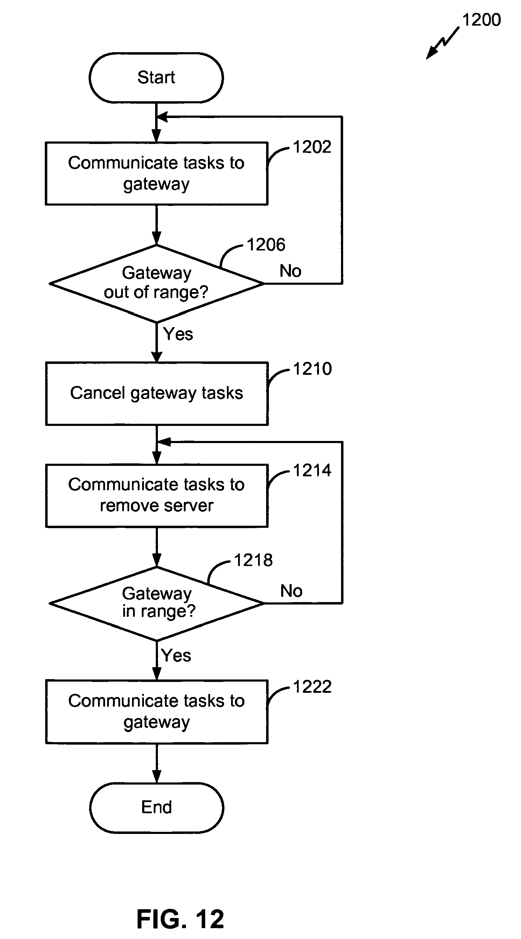

FIG. 9 illustrates a process flow diagram for task distribution between a mobile aggregator, a gateway, and a remote server. The process 900 begins at block 902, where the mobile aggregator receives data from the sensors. At decision block 906, it is determined whether the conditions for pre-processing are met. The conditions for pre-processing the task by the mobile aggregator may comprise predetermined thresholds for energy, cost, computing resources, time required for pre-processing, and the like as described above. If the conditions for preprocessing are met, the mobile aggregator continues to receive and, in one embodiment, preprocess the received data. If the conditions for preprocessing are not met, for example, when a particular condition does not meet a predetermined threshold, at decision block 910, it is determined whether the mobile aggregator is within the communication range of the gateway. If it is determined that the mobile aggregator is within the communication range of the gateway, a request for pre-processing is sent to the gateway at block 912. At decision block 914, it is determined whether a request for preprocessing has been accepted by the gateway. The gateway may accept or reject the request depending on conditions for acceptance, such as predetermined thresholds for parameters that are similar to those described above in respect to the mobile aggregator. If the request has been accepted, at block 918, the data for preprocessing is sent to the gateway. If the request has not been accepted, or if it is determined that the mobile aggregator is beyond the communication range of the gateway, at block 922, a new request for pre-processing is initiated and submitted to the remote server. As described above, the mobile aggregator may send the request for pre-processing via macro WWAN network in order to reach the remote server. This typically involves the mobile aggregator switching form a gateway-specific WWAN or OOB link to macro link, e.g., macroWWAN network. Thus, task switching is related to the wireless link switching that involves WWAN handoff from the gateway-specific WWAN to macro WWAN network. The wireless link switching is explained in greater detail in reference to FIG. 12.

At block 926, it determined whether the request has been accepted. If the request was accepted, at block 930 the data is sent to server for pre-processing. If the request has not been accepted, the mobile aggregator continues to aggregate the data received from sensors at block 934, after which the processor returns to block 906. The process 900 then ends. Typically, the remote server is always expected to accept processing requests from the mobile aggregator or the gateway because otherwise system reliability issues may arise. Similarly, the local gateway is expected to always accept processing requests from mobile devices or sensors and either perform the task or do some processing and then send it for further processing or send task without doing any processing.

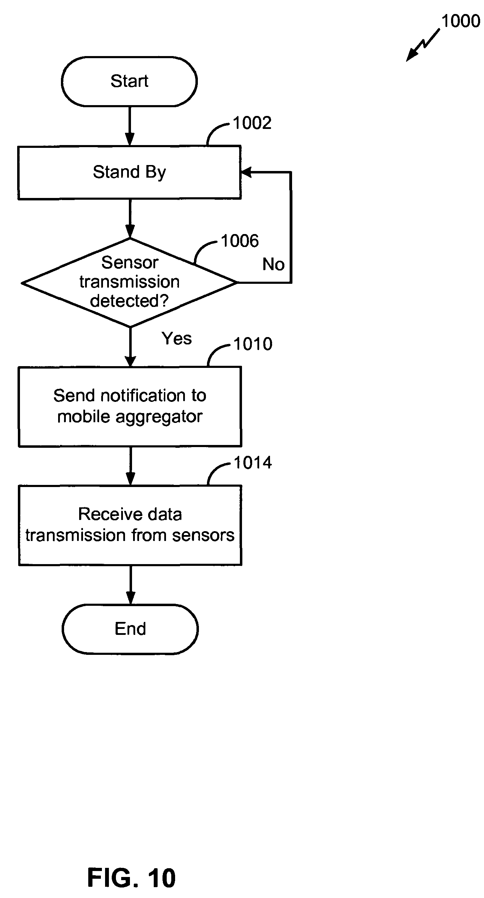

FIG. 10 is a process flow diagram for accepting data transmission from sensors by a gateway. As described above, the sensors may transmit "raw" data to a mobile aggregator or, in some instances, directly to a fixed aggregator (gateway). For example, the sensors may bypass the mobile local aggregator and communicate directly with a gateway if the gateway is determined to be within the communication range of the sensors. In one embodiment, and power capacity of the sensor may also be a factor in that is should allow for the seamless communication with the gateway). The gateway may be configured to detect the communication from the sensors and notify the mobile local aggregator that the communication is going to be accepted. In one embodiment, the mobile local aggregator may be configured to request the fixed aggregator to accept the communication from the sensors if, for example, the power supply of the mobile aggregator is determined to be below a predetermined threshold. The process 1000 begins at block 1002, where the gateway is in a stand-by mode. At decision block 1006, it is determined whether the transmission from sensors has been detected. If the transmission has been detected, at block 1010, a notification about accepting the transmission from the sensors is sent to the mobile aggregator. Finally, at block 1014, the gateway begins to receive the data transmission from the sensors. The process 1000 then ends.

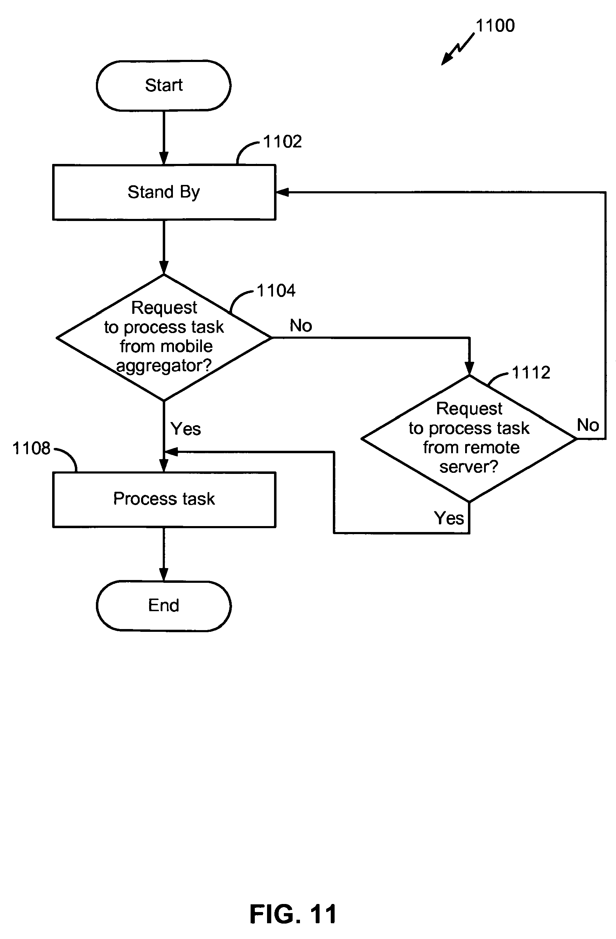

FIG. 11 illustrates a process flow diagram 1100 for task distribution between the mobile aggregator, a gateway, and a remote server. As described above in regard to FIG. 9, the task distribution between the mobile aggregator, the gateway, and the remote server provides for continuity in service, e.g. health monitoring of a patient as described above in reference to FIG. 3. Accordingly, the gateway may be configured to receive requests for, and process, tasks submitted by the mobile local aggregator and the remote server. The process 1100 illustrates an operation of the gateway configured to process tasks submitted by either device. The conditions for task distribution between the above devices, e.g., predetermined thresholds of certain parameters pertaining to each device have been described above in reference to FIG. 9. The process 1100 begins at block 1102, where a gateway is in a stand-by mode. At decision block 1104, it is determined whether a request processing task was received from the mobile local aggregator. If such request has been received, at block 1108, the task is accepted and processed by the gateway. If the request has not been received, at block 1112, it is determined whether a request to process tasks from the remote server has been received. If no such request has been received, the process returns to block 1102. If such a request has indeed been received, the process returns to block 1108, where the task is processed by the gateway. The process 1100 then ends.

FIG. 12 illustrates a process flow diagram 1200 for one embodiment of task distribution between a gateway, a mobile aggregator, and a remote server in a wireless communication system. As described above, the mobile local aggregator may get out of communication range of the gateway in some instances, such as, for example, when a user of the mobile local aggregator leaves the premises serviced by the gateway. In this instance, the mobile local aggregator switches from communicating with the gateway over OOB or gateway-specific WWAN to communicating with the remote server via a wide network (macro WWAN) as described above in reference to FIGS. 2 and 3. The process 1200 illustrates the above example. The process begins at block 1202, where the tasks (e.g., aggregated and/or pre-processed data) are being communicated from the mobile local aggregator to the gateway, i.e., the mobile local aggregator is within the communication range. At decision block 1206, it is determined whether the gateway is out of communicational range. If it is determined that the gateway is within the communication range, the tasks are continued to be communicated to the gateway. If it is determined that the gateway is out of the communication range, at block 1210, the gateway tasks may be canceled. Then, at block 1214, the canceled tasks are communicated to the remote server via the network as described above in reference to FIGS. 2 and 3. At decision block 1218, it is determined whether the gateway is again within the communication range. If the gateway remains out of the communication range, the process returns to block 1214, where the tasks are continued to be communicated to the remote server. If it is determined that the gateway is within the communication range, at block 1222, the tasks are beginning to be communicated to the gateway. The process 1200 then ends.

As discussed above, the various embodiments can be implemented in a wide variety of operating environments, which in some cases can include one or more client computers, computing devices, or processing devices which can be used to operate any of a number of applications. Client devices can include any of a number of general purpose personal computers, such as desktop or laptop computers running a standard operating system, as well as cellular, wireless, and handheld devices running mobile software and capable of supporting a number of networking and messaging protocols. Such a system also can include a number of workstations running any of a variety of commercially available operating systems and other known applications for purposes such as development and database management. These devices also can include other electronic devices, such as dummy terminals, thin-clients, gaming systems, and other devices capable of communicating via a network.

Various aspects also can be implemented as part of at least one service or Web service, such as may be part of a service-oriented architecture. Services such as Web services can communicate using any appropriate type of messaging, such as by using messages in extensible markup language (XML) format and exchanged using an appropriate protocol such as SOAP (derived from the "Simple Object Access Protocol"). Processes provided or executed by such services can be written in any appropriate language, such as the Web Services Description Language (WSDL). Using a language such as WSDL allows for functionality such as the automated generation of client-side code in various SOAP frameworks.

Many embodiments utilize at least one network that would be familiar to those skilled in the art for supporting communications using any of a variety of commercially available protocols, such as TCP/IP, OSI, FTP, UPnP, NFS, CIFS, and AppleTalk. The network can be, for example, a local area network, a wide-area network, a virtual private network, the Internet, an intranet, an extranet, a public switched telephone network, an infrared network, a wireless network, and any combination thereof.

In embodiments utilizing a remote Web server, the Web server can run any of a variety of server or mid-tier applications, including HTTP servers, FTP servers, CGI servers, data servers, Java servers, and business application servers. The server(s) also may be capable of executing programs or scripts in response to requests from client devices, such as by executing one or more Web applications that may be implemented as one or more scripts or programs written in any programming language, such as Java^{®}, C, C# or C++, or any scripting language, such as Perl, Python, or TCL, as well as combinations thereof. The server(s) may also include database servers, including without limitation, those commercially available from Oracle^{®}, Microsoft^{®}, Sybase^{®}, and IBM^{®}.

The environment can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network ("SAN") familiar to those skilled in the art. Similarly, any necessary files for performing the functions attributed to the computers, servers, or other network devices may be stored locally and/or remotely, as appropriate. Where a system includes computerized devices, each such device can include hardware elements that may be electrically coupled via a bus, the elements including, for example, at least one central processing unit (CPU), at least one input device (e.g., a mouse, keyboard, controller, touch screen, or keypad), and at least one output device (e.g., a display device, printer, or speaker). Such a system may also include one or more storage devices, such as disk drives, optical storage devices, and solid-state storage devices, such as random access memory ("RAM") or read-only memory ("ROM"), as well as removable media devices, memory cards, flash cards, and the like.

Such devices also can include a computer-readable storage media reader, a communications device (e.g., a modem, a network card (wireless or wired), an infrared communication device), and working memory as described above. The computer-readable storage media reader can be connected with, or configured to receive, a computer-readable storage medium, representing remote, local, fixed, and/or removable storage devices, as well as storage media for temporarily and/or more permanently containing, storing, transmitting, and retrieving computer-readable information. The system and various devices also typically will include a number of software applications, modules, services, or other elements located within at least one working memory device, including an operating system and application programs, such as a client application or Web browser. Alternate embodiments may have numerous variations from that described above. For example, customized hardware might also be used and/or particular elements might be implemented in hardware, software (including portable software, such as applets), or both. Further, connection to other computing devices such as network input/output devices may be employed.

Storage media and computer-readable media for containing code, or portions of code, can include any appropriate media known or used in the art, including storage media and communication media, such as, but not limited to, volatile and non-volatile, removable and non-removable media implemented in any method or technology for storage and/or transmission of information such as computer-readable instructions, data structures, program modules, or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices, or any other medium which can be used to store the desired information and which can be accessed by the system device. Based on the disclosure and teachings provided herein, a person of ordinary skill in the art will appreciate other ways and/or methods to implement the various embodiments.

The specification and drawings are, accordingly, to be regarded in an illustrative rather than a restrictive sense. Various modifications and changes may be made thereunto without departing from the scope of the present disclosure as set forth in the claims.

## Claims

1. A wireless communication system (100, 200) comprising:
a sensor (204, 302) configured to measure a characteristic and to transmit information indicative of the measured characteristic;
a mobile device (206, 304, 500) configured to:
receive the information transmitted by the sensor;
perform one or more tasks associated with the received information; the one or more tasks comprise aggregation and pre-processing;
determine whether a first condition is met so as to determine whether to offload the pre-processing; and
offload the pre-processing based, at least in part, on a determination that the condition at the mobile device is not met; and
a local gateway device (208, 306, 400) configured to:
receive wirelessly the information transmitted by the sensor;
perform the one or more tasks associated with the received information;
determine whether a second condition is met so as to determine whether to offload the pre-processing; and
offload the pre-processing based, at least in part, on a determination that the second condition at the local gateway is not met; wherein the first condition depends, at least in part, on the proximity of the sensor to the mobile device, the proximity of the mobile device to the local gateway device, the energy of a given communication link and the available power of the mobile device.

2. The wireless communication system of claim 1, wherein the local gateway device is configured to receive the information transmitted by the sensor when the sensor is determined to be within a first communication range, the first communication range determining a first communication link between the local gateway device and the sensor; and/or
wherein the sensor is configured to transmit the information via a first wireless communication protocol.

3. The wireless communication system of claim 1, further comprising a remote server (214, 314, 600) configured to perform pre-processing offloaded from the local gateway device or from the mobile device; and/or
further comprising a plurality of sensors configured to measure one or more characteristics and to transmit information indicative of the measured characteristics, wherein the mobile device and the local gateway device are each configured to aggregate the information transmitted by the plurality of sensors.

4. The wireless communication system of claim 1, wherein the local gateway device is further configured to offload the pre-processing to the mobile device; and/or
wherein the local gateway device is further configured to receive the information transferred wirelessly from the mobile device via a second wireless protocol or from the sensor via a first wireless protocol.

5. The wireless communication system of claim 1, wherein the mobile device is further configured to offload the pre-processing for further performance to a remote server when the mobile device is determined to be outside of a second communication range, the second communication range determining a second communication link between the mobile device and the local gateway device; and preferably
wherein the mobile device is further configured to accept performing preprocessing from the local gateway device when the mobile device is determined to be within the second communication range.

6. The wireless communication system of claim 1, wherein the mobile device is further configured to offload pre-processing to the gateway device; and preferably
wherein the local gateway device is configured to receive wirelessly the transferred tasks from the mobile device via a first wireless communication protocol or a second communication protocol.

7. The wireless communication system of claim 6, wherein a selection between the first wireless communication protocol or the second communication protocol for transmitting the information is based on at least one predetermined characteristic associated with each of the first and second communication protocols.

8. A computer-implemented method for dynamic task processing by a mobile device (206, 304, 500) in a wireless communication system (100, 200), comprising:
under the control of one or more computer systems configured with executable instructions,
receiving and aggregating information transmitted by at least one sensor (204, 302);
determining whether at least one condition that the mobile device has the resources for performing pre-processing associated with the aggregated information is met;
in response to the at least one resource-availability condition at the mobile device being met, performing the pre-processing; and
in response to the at least one resource-availability condition at the mobile device not being met, offloading the pre-processing; wherein the wherein the condition depends, at least in part, on the proximity of the sensor to the mobile device, the proximity of the mobile device to the local gateway device, the energy of a given communication link and the available power of the mobile device.

9. The computer-implemented method of claim 8, further comprising:
determining that a local gateway device (208, 306, 400) is with a communication range;and
offloading the pre-processing to the local gateway device; and/or
further comprising:
determining that a local gateway device (208, 306, 400) is beyond the communication range; and
offloading the pre-processing to a remote server (214, 314, 600); and/or
wherein the at least one condition at the local gateway device is selected from a plurality of conditions including a value indicating a power supply necessary for the task performance, a value indicating memory capacity for the task performance, and a value indicating the processor resources for the task performance.

10. A computer-implemented method for dynamic task processing by a local gateway device (208, 306, 400) in a wireless communication system (100, 200), comprising:
under the control of one or more computer systems (405) configured with executable instructions,
in response to a first request, receiving wirelessly (702) a first communication from a sensor (204, 302), the first communication including information indicative of measurements taken by the sensor;
determining (706) whether a first condition that the local gateway device has the resources for performing a pre-processing associated with the received information is met;
in response to the first condition at the local gateway device being met, performing (710) the pre-processing; and
in response to the first condition at the local gateway device not being met, offloading (708) the pre-processing to a remote server (214, 314, 600) or to a mobile device (206, 304, 500) for processing; wherein the first condition depends, at least in part, on the proximity of the sensor to the mobile device, the proximity of the mobile device to the local gateway device, the energy of a given communication link and the available power of the mobile device.

11. The computer-implemented method of claim 10, further comprising:
in response to a third request, receiving a third communication from the remote server;
performing a third task associated with the received third communication; and
sending information related to the performance of the third task to the remote server.

12. The computer-implemented method of claim 11, wherein the first condition is selected from a plurality of parameters indicating resources necessary for task performance.

13. A non-transitory computer-readable storage medium having computer-executable instructions for dynamic task processing stored thereon that, when executed by a computer, cause the computer to carry out the method of any of claims 8-12.

14. A local gateway device (208, 306, 400), comprising:
means (431) for transmitting information;
means (430) for receiving information; and
means (405) for processing information to:
in response to a first request for a first communication from a sensor detected by the means for receiving information, cause the means for receiving information to receive the first communication;
in response to a second request for a second communication from a mobile device detected by the means for receiving information, cause the means for receiving information to receive the second communication;
in response to a third request for a third communication from a remote server, cause the means for receiving information to receive the third communication;
perform pre-processing of information included in the received first, second, or third communications in response to a determination that at least one condition that the local gateway device has the resources to perform the pre-processing is met, wherein the local gateway device is configured to send a request for performance of the pre-processing in response to a determination that the at least one condition is not met; and
transmit information to send a fourth communication including a processed pre-processing to the remote server; wherein the condition depends, at least in part, on the proximity of the sensor to the mobile device, the proximity of the mobile device to the local gateway device, the energy of a given communication link and the available power of the mobile device.

15. A mobile device (206, 304, 500), comprising:
means (541) for transmitting information;
means (540) for receiving information; and
means (505) for processing information to:
cause the means for receiving information to receive a first communication from a sensor;
determine whether a local gateway device is within a communication range;
in response to the local gateway device being within the communication range and a determination that at least one condition that the mobile device has resources to perform one or more tasks associated with the first communication is not met, cause the means for transmitting information to send a second communication to the local gateway device, wherein the one or more tasks comprise aggregation and pre-processing; and
in response to the local gateway device being beyond the communication range and a determination that at least one condition that the mobile device has resources to perform pre-processing associated with the first communication is not met, cause the means for transmitting information to send the second communication to a remote server,
wherein the first communication includes information indicative of the sensor measurements, and the second communication includes at least one of data related to the information indicative of the sensor measurements that is aggregated by the mobile device or that is pre-processed aggregated data and wherein the condition depends, at least in part, on the proximity of the sensor to the mobile device, the proximity of the mobile device to the local gateway device, the energy of a given communication link and the available power of the mobile device.

## Patentansprüche

1. Ein Drahtloskommunikationssystem (100, 200), das Folgendes aufweist:
einen Sensor (204, 302), der konfiguriert ist zum Messen einer Eigenschaft und zum Senden von Information, die indikativ für die gemessenen Eigenschaft ist;
eine Mobileinrichtung (206, 304, 500), die konfiguriert ist zum:
Empfangen der Information, die von dem Sensor gesendet wurde;
Durchführen einer Aufgabe oder mehrerer Aufgaben, die mit der empfangenen Information assoziiert sind, wobei die eine Aufgabe oder die mehreren Aufgaben Aggregation und Vorverarbeitung aufweisen;
Bestimmen, ob eine erste Bedingung erfüllt ist, und zwar um zu Bestimmen, ob die Vorverarbeitung auszulagern ist; und
Auslagern der Vorverarbeitung, zumindest teilweise basierend auf einer Bestimmung, dass die Bedingung in der Mobileinrichtung nicht erfüllt ist; und
eine Lokalgatewayeinrichtung (208, 306, 400), die konfiguriert ist zum:
Drahtlosempfangen der Information, die durch dem Sensor gesendet wurde;
Durchführen der einen Aufgabe oder der mehreren Aufgaben, die mit der empfangenen Information assoziiert sind;
Bestimmen, ob eine zweite Bedingung erfüllt ist, und zwar zum Bestimmen, ob die Vorverarbeitung auszulagern ist; und
Auslagern der Vorverarbeitung, zumindest teilweise basierend auf einer Bestimmung, dass die zweite Bedingung in der Lokalgatewayeinrichtung nicht erfüllt ist, wobei die erste Bedingung zumindest teilweise von dem Entfernung des Sensors zu der Mobileinrichtung, der Entfernung der Mobileinrichtung zu der Lokalgatewayeinrichtung, der Energie von einer gegebenen Kommunikationsverbindung und der verfügbaren Leistung der Mobileinrichtung abhängt.

2. Drahtloskommunikationssystem nach Anspruch 1, wobei die Lokalgatewayeinrichtung konfiguriert ist zum Empfangen der Information, die durch den Sensor gesendet wurde, wenn bestimmt wurde, dass der Sensor innerhalb eines ersten Kommunikationsbereichs ist, wobei der erste Kommunikationsbereich eine Kommunikationsverbindung zwischen der Lokalgatewayeinrichtung und dem Sensor bestimmt; und /oder
wobei der Sensor konfiguriert ist zum Senden der Information über ein erstes Drahtloskommunikationsprotokoll.

3. Drahtloskommunikationssystem nach Anspruch 1, das ferner einen fernen Server (214, 314, 600) aufweist, der konfiguriert ist zum Durchführen von Vorverarbeitung, die von der Lokalgatewayeinrichtung oder von der Mobileinrichtung ausgelagert wurde; und/oder
ferner eine Vielzahl von Sensoren aufweist, die konfiguriert sind zum Messen einer oder mehrerer Eigenschaften und zum Senden von Information indikativ für die gemessenen Eigenschaften, wobei sowohl die Mobileinrichtung als auch die Lokalgatewayeinrichtung konfiguriert sind, die von der Vielzahl von Sensoren gesendete Information zu aggregieren.

4. Drahtloskommunikationssystem nach Anspruch 1, wobei die Lokalgatewayeinrichtung ferner konfiguriert ist zum Auslagern der Vorverarbeitung an die Mobileinrichtung, und/oder
wobei die Lokalgatewayeinrichtung ferner konfiguriert ist zum Empfangen der Information, die drahtlos von der Mobileinrichtung über ein zweites Drahtlosprotokoll oder von dem Sensor über ein erstes Drahtlosprotokoll übertragen wurde.

5. Drahtloskommunikationssystem nach Anspruch 1, wobei die Mobileinrichtung ferner konfiguriert ist zum Auslagern der Vorverarbeitung für weitere Durchführung zu einem fernen Server, wenn bestimmt wurde, dass die Mobileinrichtung außerhalb eines zweites zweiten Kommunikationsbereichs zwischen der Mobileinrichtung und der Lokalgatewayeinrichtung ist, der zweite Kommunikationsbereich bestimmt einen zweite Kommunikationsverbindung zwischen der Mobileinrichtung und der Lokalgatewayeinrichtung; und bevorzugt
wobei die Mobileinrichtung ferner konfiguriert ist zum Annehmen von Durchführen von Vorverarbeitung von der Lokalgatewayeinrichtung wenn bestimmt wurde, dass die Mobileinrichtung in dem zweiten Kommunikationsbereich ist.

6. Drahtloskommunikationssystem nach Anspruch 1, wobei die Mobileinrichtung ferner zum Auslagern von Vorverarbeitung an die Lokalgatewayeinrichtung konfiguriert ist, und bevorzugt
wobei die Lokalgatewayeinrichtung konfiguriert ist zum Drahtlosempfangen der übertragenen Aufgaben von der Mobileinrichtung über ein erstes Drahtloskommunikationsprotokoll oder ein zweites Kommunikationsprotokoll.

7. Drahtloskommunikationssystem nach Anspruch 6, wobei eine Auswahl zwischen dem ersten Drahtloskommunikationsprotokoll oder dem zweiten Drahtloskommunikationsprotokoll zum Senden der Information auf mindestens einer vorbestimmten Eigenschaft basiert, die mit sowohl dem ersten als auch dem zweiten Drahtloskommunikationsprotokoll assoziiert ist.

8. Ein computerimplementiertes Verfahren für dynamische Aufgabenverarbeitung durch eine Mobileinrichtung (206, 304, 500) in einem Drahtloskommunikationssystem (100, 200), das Folgendes aufweist:
unter der Steuerung von einem oder mehreren Computersystemen, die mit ausführbaren Instruktionen konfiguriert sind:
Empfangen und Aggregieren von Information, die von mindestens einem Sensor (204, 302) gesendet wurde;
Bestimmen, ob mindestens eine Bedingung erfüllt ist, und zwar dass die Mobileinrichtung Ressourcen zum Durchführen von Vorverarbeitung hat, die mit der aggregierten Information assoziiert ist;
ansprechend darauf, dass die mindestens eine Ressourcenverfügbarkeitsbedingung für die Mobileinrichtung erfüllt ist, Durchführen der Vorverarbeitung; und
ansprechend darauf, dass die mindestens eine Ressourcenverfügbarkeitsbedingung für die Mobileinrichtung nicht erfüllt ist, Auslagern der Vorverarbeitung; wobei die Bedingung zumindest teilweise von der Entfernung des Sensors zu der Mobileinrichtung, der Entfernung der Mobileinrichtung zu der Lokalgatewayeinrichtung, der Energie einer gegebenen Kommunikationsverbindung und der verfügbaren Leistung der Mobileinrichtung abhängt.

9. Computerimplementiertes Verfahren nach Anspruch 8, das ferner Folgendes aufweist:
Bestimmen, dass eine Lokalgatewayeinrichtung (208, 306, 400) innerhalb eines Kommunikationsbereichs ist; und
Auslagern der Vorverarbeitung an die Lokalgatewayeinrichtung; und/oder ferner Folgendes aufweist:
Bestimmen, dass eine Lokalgatewayeinrichtung (208, 306, 400) außerhalb des Kommunikationsbereich ist; und
Auslagern der Vorverarbeitung an einen fernen Server (214, 314, 600); und/oder
wobei die mindestens eine Bedingung in der Lokalgatewayeinrichtung von einer Vielzahl von Bedingungen ausgewählt wird, einschließlich eines Werts, der eine Leistungsversorgung anzeigt, die für die Aufgabendurchführung notwendig ist, eines Wert, der Speicherkapazität für die Aufgabendurchführung anzeigt, und eines Werts, der die Prozessorressourcen für die Aufgabendurchführung anzeigt.

10. Ein computerimplementiertes Verfahren für dynamische Aufgabenverarbeitung durch eine Lokalgatewayeinrichtung (208, 306, 400) in einem Drahtloskommunikationssystem (100, 200), das Folgendes aufweist:
unter der Steuerung von einem oder mehreren Computersystemen (405), die mit ausführbaren Instruktionen konfiguriert sind:
ansprechend auf eine erste Anforderung, Drahtlosempfangen (702) einer ersten Kommunikation von einem Sensor (204, 302), wobei die erste Kommunikation Information indikativ für Messungen enthält, die von einem Sensor vorgenommen wurden;
Bestimmen (706), ob eine erste Bedingung, dass die Lokalgatewayeinrichtung die Ressourcen für Durchführen einer Vorverarbeitung hat, die mit der empfangenen Information assoziiert ist, erfüllt ist;
ansprechend darauf, dass die erste Bedingung in der Lokalgatewayeinrichtung erfüllt ist, Durchführen (710) der Vorverarbeitung; und
ansprechend darauf, dass die erste Bedingung in der Lokalgatewayeinrichtung nicht erfüllt ist, Auslagern (708) der Vorverarbeitung an einen fernen Server (214, 314, 600) oder an eine Mobileinrichtung (206, 304, 500) zur Verarbeitung;
wobei die erste Bedingung zumindest teilweise abhängt von der Entfernung des Sensors zu der Mobileinrichtung, der Entfernung der Mobileinrichtung zu der Lokalgatewayeinrichtung, der Energie einer gegebenen Kommunikationsverbindung und der verfügbaren Leistung der Mobileinrichtung.

11. Computerimplementiertes Verfahren nach Anspruch 10, das ferner Folgendes aufweist:
ansprechend auf eine dritte Anforderung, Empfangen einer dritten Kommunikation von dem fernen Server;
Durchführen einer dritten Aufgabe, die mit der empfangenen dritten Kommunikation assoziiert ist; und
Senden von Information, die auf die Durchführung der dritten Aufgabe bezogen ist, und zwar an den fernen Server.

12. Computerimplementiertes Verfahren nach Anspruch 11, wobei die erste Bedingung von einer Vielzahl von Parametern ausgewählt wird, die Ressourcen anzeigen, die für die Aufgabendurchführung notwendig sind.

13. Ein nichtvergängliches computerlesbares Speichermedium, das computerausführbare Instruktionen für dynamisches Aufgabenverarbeiten darauf gespeichert hat, die, wenn durch einen Computer ausgeführt, den Computer zum Ausführen des Verfahren nach irgendeinem der Ansprüche 8-12 veranlassen.

14. Eine Lokalgatewayeinrichtung (208, 306, 400), die Folgendes aufweist:
Mittel (431) zum Senden von Information;
Mittel (430) zum Empfangen von Information; und
Mittel (405) zum Verarbeiten von Information, und zwar ansprechend auf eine erste Anforderung für eine erste Kommunikation von einem Sensor, die von den Mitteln zum Empfangen von Information erkannt wurde, Veranlassen der Mittel zum Empfangen von Information zum Empfangen der ersten Kommunikation;
ansprechend auf eine zweite Anforderung für eine zweite Kommunikation von einer Mobileinrichtung, die von den Mitteln zum Empfangen von Information erkannt wurde, Veranlassen der Mittel zum Empfangen von Information zum Empfangen der zweiten Kommunikation;
ansprechend auf eine dritte Anforderung für eine dritte Kommunikation von einem fernen Server, Veranlassen der Mittel zum Empfangen von Information zum Empfangen der dritten Kommunikation;
Durchführen von Vorverarbeitung von Information, die in der empfangenen ersten, zweiten oder dritten Kommunikation enthalten ist, und zwar ansprechend auf eine Bestimmung, dass mindestens eine Bedingung, dass die Lokalgatewayeinrichtung die Ressourcen zum Durchführen von Vorverarbeitung hat, erfüllt ist, wobei die Lokalgatewayeinrichtung konfiguriert ist zum Senden einer Anforderung zum Durchführen der Vorverarbeitung ansprechend auf eine Bestimmung, dass die mindestens eine Bedingung nicht erfüllt ist; und
Übertragen von Information zum Senden einer vierten Kommunikation einschließlich einer verarbeiteten Vorverarbeitung zu dem fernen Server, wobei die wobei die Bedingung zumindest teilweise abhängt von der Entfernung des Sensors zu der Mobileinrichtung, der Entfernung der Mobileinrichtung zu der Lokalgatewayeinrichtung, der Energie eine gegebenen Kommunikationsverbindung und der verfügbaren Leistung der Mobileinrichtung.

15. Eine Mobileinrichtung (206, 304, 500), die Folgendes aufweist:
Mittel (541) zum Senden von Information;
Mittel (540) zum Empfangen von Information; und
Mittel (505) zum Verarbeiten von Information, und zwar
zum Veranlassen der Mittel zum Empfangen von Information eine erste Kommunikation von einem Sensor zu empfangen;
Bestimmen, ob eine Lokalgatewayeinrichtung innerhalb eines Kommunikationsbereichs ist;
ansprechend darauf, dass die Lokalgatewayeinrichtung in dem Kommunikationsbereichs ist und einer Bestimmung, dass mindestens eine Bedingung nicht erfüllt ist, und zwar dass die Mobileinrichtung Ressourcen zum Durchführen einer Aufgabe oder mehrerer Aufgaben hat, die mit der ersten Kommunikation assoziiert sind, Veranlassen der Mittel zum Übertragen von Information zum Senden einer zweiten Kommunikation an die Lokalgatewayeinrichtung, wobei die eine Aufgabe oder die mehreren Aufgaben Aggregation und Vorverarbeitung aufweisen; und ansprechend darauf, dass die Lokalgatewayeinrichtung außerhalb des Kommunikationsbereich ist und einer Bestimmung, dass mindestens eine Bedingung, und zwar dass die Mobileinrichtung Ressourcen zum Durchführen von Vorverarbeitung hat, die mit der ersten Kommunikation assoziiert ist, nicht erfüllt ist, Veranlassen der Mittel zum Übertragen von Information zum Senden der zweiten Kommunikation an einen fernen Server,
wobei die erste Kommunikation Information aufweist, die indikativ für den Sensormessungen ist, und die zweite Kommunikation mindestens eines der Folgenden aufweist: Daten bezogen auf die Information indikativ für den Sensormessungen, die von der Mobileinrichtung aggregiert werden oder die vorverarbeitete aggregierte Daten sind, und wobei die Bedingung zumindest teilweise abhängt von der Entfernung des Sensors zu der Mobileinrichtung, der Entfernung der Mobileinrichtung zu der Lokalgatewayeinrichtung, der Energie einer gegebenen Kommunikationsverbindung und der verfügbaren Leistung der Mobileinrichtung.

## Revendications

1. Système de communication sans fil (100, 200) comprenant :
un capteur (204, 302) agencé pour mesurer une caractéristique et pour transmettre des informations indicatives de la caractéristique mesurée ;
un dispositif mobile (206, 304, 500) agencé pour :
- recevoir les informations transmises par le capteur ;
- réaliser une ou plusieurs tâches associées aux informations reçues, lesdites une ou plusieurs tâches comprenant un regroupement et un prétraitement ;
- déterminer si une première condition est satisfaite pour déterminer s'il faut décharger le prétraitement ; et
- décharger the prétraitement en fonction, au moins en partie, d'une détermination du fait que la condition du dispositif mobile n'est pas satisfaite ; et
une passerelle locale (208, 306, 400) agencée pour :
- recevoir sans fil les informations transmises par le capteur ;
- réaliser lesdites une ou plusieurs tâches associées aux informations reçues ;
- déterminer si une seconde condition est satisfaite pour déterminer s'il faut décharger le prétraitement ; et
- décharger the prétraitement en fonction, au moins en partie, d'une détermination du fait que la seconde condition au niveau de la passerelle locale n'est pas satisfaite ; dans lequel la première condition dépend, au moins en partie, de la proximité du capteur au dispositif mobile, de la proximité du dispositif mobile à la passerelle locale, de l'énergie d'une liaison de communication donnée, et de la puissance disponible du dispositif mobile.

2. Système de communication sans fil selon la revendication 1, dans lequel la passerelle locale est agencée pour recevoir les informations transmises par le capteur quand il est déterminé que le capteur est dans une première plage de communication, la première plage de communication déterminant une première liaison de communication entre la passerelle locale et le capteur ; et/ou
dans lequel le capteur est agencé pour transmettre les informations par l'intermédiaire d'un premier protocole de communication sans fil.

3. Système de communication sans fil selon la revendication 1, comprenant en outre un serveur distant (214, 314, 600) agencé pour réaliser un prétraitement déchargé à partir de la passerelle locale ou à partir du dispositif mobile ; et/ou
comprenant en outre une pluralité de capteurs agencés pour mesurer une ou plusieurs caractéristiques et pour transmettre des informations indicatives des caractéristiques mesurées, dans lequel chacun du dispositif mobile et de la passerelle locale est agencé pour regrouper les informations transmises par la pluralité de capteurs.

4. Système de communication sans fil selon la revendication 1, dans lequel la passerelle locale est en outre agencée pour décharger le prétraitement vers le dispositif mobile ; et/ou
dans lequel la passerelle locale est en outre agencée pour recevoir les informations transférées sans fil à partir du dispositif mobile par l'intermédiaire d'un second protocole sans fil, ou à partir du capteur par l'intermédiaire d'un premier protocole sans fil.

5. Système de communication sans fil selon la revendication 1, dans lequel le dispositif mobile est en outre agencé pour décharger le prétraitement pour une réalisation vers un serveur distant quand il est déterminé que le dispositif mobile est à l'extérieur d'une seconde plage de communication, la seconde plage de communication déterminant une seconde liaison de communication entre le dispositif mobile et la passerelle locale ; et de préférence
dans lequel le dispositif mobile est en outre agencé pour accepter la réalisation du prétraitement à partir de la passerelle locale quand il est déterminé que le dispositif mobile est dans la seconde plage de communication.

6. Système de communication sans fil selon la revendication 1, dans lequel le dispositif mobile est en outre agencé pour décharger le prétraitement vers la passerelle : et de préférence
dans lequel la passerelle locale est agencée pour recevoir sans fil les tâches transférées à partir du dispositif mobile par l'intermédiaire d'un premier protocole de communication sans fil ou d'un second protocole de communication.

7. Système de communication sans fil selon la revendication 6, dans lequel une sélection entre le premier protocole de communication sans fil ou le second protocole de communication pour transmettre les informations est basée sur au moins une caractéristique prédéterminée associée aux premier et second protocoles de communication.

8. Procédé mis en oeuvre par ordinateur pour le traitement dynamique de tâches par un dispositif mobile (206, 304, 500) dans un système de communication sans fil (100, 200), comprenant :
sous la commande d'un ou plusieurs systèmes d'ordinateur agencés par des instructions exécutables,
recevoir et regrouper des informations transmises par au moins un capteur (204, 302) ;
déterminer si au moins une condition est satisfaite selon laquelle le dispositif mobile possède les ressources pour réaliser le prétraitement associé aux informations regroupées ;
en réponse au fait que ladite au moins une condition de disponibilité de ressources au niveau du dispositif mobile est satisfaite, réaliser le prétraitement ; et
en réponse au fait que ladite au moins une condition de disponibilité de ressources au niveau du dispositif mobile n'est pas satisfaite, décharger le prétraitement dans lequel la condition dépend, au moins en partie, de la proximité du capteur au dispositif mobile, de la proximité du dispositif mobile à la passerelle locale, de l'énergie d'une liaison de communication donnée, et de la puissance disponible du dispositif mobile.

9. Procédé mis en oeuvre par ordinateur selon la revendication 8, comprenant :
déterminer qu'une passerelle locale (208, 306, 400) est dans une plage de communication ; et
décharger le prétraitement dans la passerelle locale ; et/ou
comprenant en outre :
déterminer qu'une passerelle locale (208, 306, 400) est en dehors de la page de communication ; et
décharger le prétraitement vers un serveur distant (214, 314, 600) ; et/ou
dans lequel ladite au moins une condition au niveau de la passerelle locale est choisie parmi plusieurs conditions incluant une valeur indiquant une puissance nécessaire à la réalisation de la tâche ; une valeur indiquant une capacité de mémoire pour la réalisation de la tâche ; et une valeur indiquant les ressources du processeur pour la réalisation de la tâche.

10. Procédé mis en oeuvre par ordinateur pour un traitement dynamique de tâches par une passerelle locale (208, 306, 400) dans un système de communication sans fil (100, 200) comprenant :
sous la commande d'un ou plusieurs systèmes d'ordinateurs (405) agencés par des instructions exécutables ;
- en réponse à une première requête, recevoir sans fil (702) une première communication d'un capteur (204, 302), la première communication incluant des informations indicatives de mesures effectuées par le capteur ;
- déterminer (706) si une première condition selon laquelle la passerelle locale a les ressources pour réaliser un prétraitement associé aux informations reçues est satisfaite ;
- en réponse à la satisfaction de la première condition au niveau de la passerelle locale, réaliser (710) le prétraitement ; et
- en réponse au fait que la première condition au niveau de la passerelle locale n'est pas satisfaite, décharger (708) le prétraitement vers un serveur distant (214, 314, 600) ou un dispositif mobile (206, 304, 500) pour traitement ; dans lequel la première condition dépend au moins en partie de la proximité du capteur au dispositif mobile, de la proximité du dispositif mobile à la passerelle locale, de l'énergie d'une liaison de communication donnée, et de la puissance disponible du dispositif mobile.

11. Procédé mis en oeuvre par ordinateur selon la revendication 10, comprenant en outre :
en réponse à une troisième requête, recevoir une troisième communication du serveur distant ;
réaliser une troisième tâche associée à la troisième communication reçue ; et
envoyer des informations relatives à la réalisation de la troisième tâche au serveur distant.

12. Procédé mis en oeuvre par ordinateur selon la revendication 11, dans lequel la première condition est choisie parmi une pluralité de paramètres indiquant des ressources nécessaires à la réalisation des tâches.

13. Milieu de mémorisation non transitoire lisible par ordinateur contenant des instructions exécutables par ordinateur pour un traitement dynamique de tâches mémorisées qui, quand il est exécuté par un ordinateur, amène l'ordinateur à mettre en oeuvre le procédé selon l'une quelconque des revendications 8 à 12.

14. Passerelle locale (208, 306, 400) comprenant :
des moyens (431) pour transmettre des informations ;
des moyens (430) pour recevoir des informations ; et
des moyens (405) pour traiter des informations pour :
en réponse à une première requête pour une première communication d'un capteur détecté par les moyens de réception d'informations, amener les moyens de réception d'informations à recevoir la première communication ;
en réponse à une seconde requête pour une seconde communication en provenance d'un dispositif mobile détecté par les moyens de réception d'informations, amener les moyens de réception d'informations à recevoir la seconde communication ;
en réponse à une troisième requête pour une troisième communication en provenance d'un serveur distant, amener les moyens de réception d'informations à recevoir la troisième communication ;
réaliser un prétraitement des informations incluses dans les première, deuxième ou troisième communications reçues en réponse à une détermination du fait qu'au moins une condition selon laquelle la passerelle locale a les ressources propres à réaliser le prétraitement est satisfaite, dans lequel la passerelle locale est agencée pour envoyer une requête de réalisation du prétraitement en réponse à une détermination du fait que ladite au moins une condition n'est pas satisfaite ; et
transmettre des informations pour envoyer une quatrième communication incluant un prétraitement traité vers le serveur distant ; dans lequel la condition dépend au moins en partie de la proximité du capteur au dispositif mobile, de la proximité du dispositif mobile à la passerelle locale, de l'énergie d'une liaison de communication donnée, et de la puissance disponible du dispositif mobile.

15. Dispositif mobile (206, 304, 500) comprenant :
des moyens (541) pour transmettre des informations ;
des moyens (540) pour recevoir des informations ; et
des moyens (505) pour traiter des informations pour :
amener les moyens de réception d'informations à recevoir une première communication d'un capteur ;
déterminer si une passerelle locale est dans une plage de communication ;
en réponse au fait que la passerelle locale est dans la plage de communication et à une détermination du fait qu'au moins une condition selon laquelle le dispositif mobile a les ressources propres à mettre en oeuvre lesdites une ou plusieurs plages associées à la première communication n'est pas satisfaite, amener les moyens pour transmettre des informations à envoyer une seconde communication à la passerelle locale, dans lequel lesdites une ou plusieurs tâches comprennent un regroupement et un prétraitement ; et
en réponse au fait que la passerelle locale est au-delà de la plage de communication et à une détermination du fait qu'au moins une condition selon laquelle le dispositif mobile a les ressources propres à réaliser le prétraitement associé à la première communication n'est pas satisfaite, amener les moyens pour transmettre des informations à envoyer la seconde communication à un serveur distant,
dans lequel la première communication inclut des informations indicatives des mesures du capteur, et la seconde communication inclut au moins l'une de données associées aux informations indicatives des mesures du capteur qui sont regroupées par le dispositif mobile, ou qui sont des données regroupées et prétraitées et dans lequel la condition dépend au moins en partie de la proximité du capteur au dispositif mobile, de la proximité du dispositif mobile à la passerelle locale, de l'énergie d'une liaison de communication donnée, et de la puissance disponible du dispositif mobile.
